# EUROPÄISCHE PATENTANMELDUNG

(11) **EP 4 537 998 A1**
(43) Veröffentlichungstag der Anmeldung: **16.04.2025**
(21) Anmeldenummer: 24205834.5
(22) Anmeldetag: 10.10.2024
(51) Int. Cl.: B25J 11/00, B25J 15/00, B25J 15/02

(54) **GREIFERANORDNUNG MIT HINTEREINANDERLIEGENDEN PRODUKTAUFNAHMEN**

(30) Priorität: 11.10.2023 DE 102023127730
(71) Anmelder: MULTIVAC Sepp Haggenmüller SE & Co. KG, 87787 Wolfertschwenden (DE)
(72) Erfinder: WINTERGERST, Bernd, 87749 Hawangen (DE)
(74) Vertreter: Grünecker Patent- und Rechtsanwälte PartG mbB

(57) **Zusammenfassung**

Eine Greiferanordnung (1), umfasst einen Hauptkörper (3) zum Anbringen an einer Verfahreinrichtung (5), einen an dem Hauptkörper (3) angebrachten ersten Greifer (7) und einen an dem Hauptkörper (3) angebrachten zweiten Greifer (9). Der erste Greifer (7) umfasst eine erste Produktaufnahme (13) und einen ersten Antrieb (17). Der erste Antrieb (17) ist dazu konfiguriert, die erste Produktaufnahme (13) parallel zu einer relativ zu dem Hauptkörper (3) definierten Querrichtung (19) zwischen einer ersten Freigabestellung und einer ersten Aufnahmestellung zu bewegen. Der zweite Greifer (9) umfasst eine zweite Produktaufnahme (15) und einen zweiten Antrieb (21). Der zweite Antrieb (21) ist dazu konfiguriert, die zweite Produktaufnahme (15) parallel zu der Querrichtung (19) zwischen einer zweiten Freigabestellung und einer zweiten Aufnahmestellung zu bewegen. Der erste Greifer (7) und der zweite Greifer (9) liegen entlang einer zu der Querrichtung (19) senkrechten Längsrichtung (11) hinter, so dass die erste Produktaufnahme (13) und die zweite Produktaufnahme (15) zusammen zumindest einen Teil einer gemeinsamen Produktaufnahmefläche (29) bilden, wenn die erste Produktaufnahme (13) in der ersten Aufnahmestellung und die zweite Produktaufnahme (15) in der zweiten Aufnahmestellung vorliegt.

## Beschreibung

Die Erfindung betrifft das Gebiet der Greiferanordnungen zum Handhaben von Produkten, insbesondere zum Handhaben von Lebensmittelprodukten.

Die EP 4 059 672 A1 offenbart eine Greiferanordnung zur Anbringung an einer Robotereinrichtung. Die Greiferanordnung umfasst eine erste Backe und eine zweite Backe, die relativ zueinander von einer Greifposition in eine offene Position bewegbar sind. Zum Freigeben eines Nahrungsmittelprodukts wird die erste Backe relativ zu der zweiten Backe von der Greifposition in die offene Position bewegt, sodass eine Seite des Nahrungsmittelprodukts nicht von der ersten Backe gestützt wird, während eine andere Seite des Nahrungsmittelprodukts zeitweise auf der zweiten Backe ruht, sodass sich ein Kippen des Nahrungsmittelprodukts um eine Längsachse des Nahrungsmittelprodukts ergibt, wenn das Nahrungsmittelprodukt zwischen den beiden Backen abgeworfen wird.

Es ist eine Aufgabe der Erfindung, einen Weg zum Transportieren oder Positionieren von Produkten anzugeben, insbesondere zum Positionieren von Produkten in einer gewünschten Position und/oder Orientierung.

Gemäß einem ersten Aspekt der Erfindung wird eine Greiferanordnung bereitgestellt. Die Greiferanordnung umfasst einen Hauptkörper, einen ersten Greifer und einen zweiten Greifer. Der Hauptkörper ist zum Anbringen an einer Verfahreinrichtung konfiguriert. Der erste Greifer und der zweite Greifer sind an dem Hauptkörper angebracht. Der erste Greifer umfasst eine erste Produktaufnahme und einen ersten Antrieb. Der erste Antrieb ist dazu konfiguriert, die erste Produktaufnahme parallel zu einer Querrichtung zwischen einer ersten Freigabestellung und einer ersten Aufnahmestellung zu bewegen. Die Querrichtung ist relativ zu dem Hauptkörper definiert. Der zweite Greifer umfasst eine zweite Produktaufnahme und einen zweiten Antrieb. Der zweite Antrieb ist dazu konfiguriert, die zweite Produktaufnahme parallel zu der Querrichtung zwischen einer zweiten Freigabestellung und einer zweiten Aufnahmestellung zu bewegen. Eine Längsrichtung ist zu der Querrichtung senkrecht. Der erste Greifer und der zweite Greifer liegen entlang der Längsrichtung hintereinander, so dass die erste Produktaufnahme und die zweite Produktaufnahme zusammen zumindest einen Teil einer gemeinsamen Produktaufnahmefläche bilden, wenn die erste Produktaufnahme in der ersten Aufnahmestellung und die zweite Produktaufnahme in der zweiten Aufnahmestellung vorliegt.

Der erste Antrieb kann dazu konfiguriert sein, die erste Produktaufnahme parallel zu der Querrichtung von der ersten Freigabestellung in die erste Aufnahmestellung zu bewegen und die erste Produktaufnahme dabei unter ein aufzunehmendes Produkt zu schieben.

Der zweite Antrieb kann dazu konfiguriert sein, die zweite Produktaufnahme parallel zu der Querrichtung von der zweiten Freigabestellung in die zweite Aufnahmestellung zu bewegen und die zweite Produktaufnahme dabei unter das aufzunehmende Produkt zu schieben.

Die erste Produktaufnahme und die zweite Produktaufnahme können unter dasselbe aufzunehmende Produkt geschoben werden, so dass das Produkt auf der zumindest zum Teil von der ersten Produktaufnahme und der zweiten Produktaufnahme gebildeten gemeinsamen Produktaufnahmefläche aufgenommen wird.

Da der erste Greifer und der zweite Greifer entlang der Längsrichtung hintereinanderliegen, kann ein erster Bereich des Produkts auf der ersten Produktaufnahme liegen, während ein entlang der Längsrichtung hinter dem ersten Bereich des Produkts liegender zweiten Bereich des Produkts auf der zweiten Produktaufnahme liegt.

Wenn die erste Produktaufnahme in der ersten Aufnahmestellung und die zweite Produktaufnahme in der zweiten Aufnahmestellung vorliegt, können die erste Produktaufnahme und die zweite Produktaufnahme entlang der Längsrichtung hintereinanderliegen, insbesondere linear hintereinanderliegen. Wenn die erste Produktaufnahme in der ersten Aufnahmestellung und die zweite Produktaufnahme in der zweiten Aufnahmestellung vorliegt, können die erste Produktaufnahme und die zweite Produktaufnahme in einer gemeinsamen Ebene liegen.

Wenn die erste Produktaufnahme in der ersten Freigabestellung und die zweite Produktaufnahme in der zweiten Freigabestellung vorliegt, können die erste Produktaufnahme und die zweite Produktaufnahme entlang der Längsrichtung hintereinanderliegen, insbesondere linear hintereinanderliegen. Wenn die erste Produktaufnahme in der ersten Freigabestellung und die zweite Produktaufnahme in der zweiten Freigabestellung vorliegt, können die erste Produktaufnahme und die zweite Produktaufnahme in einer gemeinsamen Ebene liegen.

Der erste Antrieb kann dazu konfiguriert sein, die erste Produktaufnahme in einem ersten Richtungssinn parallel zu der Querrichtung von der ersten Freigabestellung in die erste Aufnahmestellung zu bewegen. Der zweite Antrieb kann dazu konfiguriert sein, die zweite Produktaufnahme in dem ersten Richtungssinn parallel zu der Querrichtung von der zweiten Freigabestellung in die zweite Aufnahmestellung zu bewegen.

Der erste Antrieb kann dazu konfiguriert sein, die erste Produktaufnahme in einem zweiten Richtungssinn parallel zu der Querrichtung von der ersten Aufnahmestellung in die erste Freigabestellung zu bewegen. Der zweite Antrieb kann dazu konfiguriert sein, die zweite Produktaufnahme in dem zweiten Richtungssinn parallel zu der Querrichtung von der zweiten Aufnahmestellung in die zweite Freigabestellung zu bewegen. Der zweite Richtungssinn kann dem ersten Richtungssinn entgegengesetzt sein.

Die Querrichtung kann eine horizontale Richtung sein oder eine im Wesentlichen horizontale Richtung sein. Die Längsrichtung kann eine horizontale Richtung sein oder eine im Wesentlichen horizontale Richtung sein.

Der erste Antrieb kann dazu konfiguriert sein, die erste Produktaufnahme von der ersten Aufnahmestellung in Richtung auf die erste Freigabestellung zu bewegen, um die erste Produktaufnahme unter einem auf der gemeinsamen Produktaufnahmefläche liegenden Produkt wegzuziehen.

Der zweite Antrieb kann dazu konfiguriert sein, die zweite Produktaufnahme aus der zweiten Aufnahmestellung in Richtung auf die zweite Freigabestellung zu bewegen, um die zweite Produktaufnahme unter einem auf der gemeinsamen Produktaufnahmefläche aufgenommenen Produkt wegzuziehen.

Die erste Produktaufnahme und die zweite Produktaufnahme können durch den ersten Antrieb und den zweiten Antrieb getrennt voneinander bewegbar sein, insbesondere unabhängig voneinander bewegbar sein. Durch Bewegen einer Produktaufnahme kann gezielt lokal auf ein auf der gemeinsamen Produktaufnahmefläche aufgenommenes Produkt eingewirkt werden. Durch geeignetes Bewegen der ersten Produktaufnahme und/oder der zweiten Produktaufnahme kann eine Bewegung eines auf der gemeinsamen Produktaufnahmefläche liegenden Produkts hervorgerufen, begünstigt oder beeinflusst werden.

Der zweite Antrieb kann dazu konfiguriert sein, die zweite Produktaufnahme von der zweiten Aufnahmestellung in Richtung auf die zweite Freigabestellung zu bewegen, während die erste Produktaufnahme in der ersten Aufnahmestellung verbleibt. Die zweite Produktaufnahme kann unter einem Teil eines auf der gemeinsamen Produktaufnahmefläche liegenden Produkts wegbewegt werden, während die erste Produktaufnahme unter einem anderen Teil des Produkts verbleibt und den anderen Teil des Produkts stützt. Der nicht mehr durch die zweite Produktaufnahme gestützte Teil des Produkts kann nach unten kippen oder klappen, wodurch eine Drehbewegung des Produkts hervorgerufen oder begünstigt werden kann. Die Drehbewegung des Produkts kann eine Drehbewegung um eine parallel zu der Querrichtung stehende Drehachse sein. Die Drehbewegung kann bei einem Abwurf des Produkts dazu führen, dass das Produkt in einer anderen Orientierung auf einer Ablagefläche aufkommt, als es auf der gemeinsamen Produktaufnahmefläche gelegen war. Beispielsweise kann das Produkt bei einem Abwurf von der Greiferanordnung auf eine Ablagefläche eine Drehung um die Drehachse durchführen, insbesondere eine Drehung um 180 Grad oder um zumindest im Wesentlichen 180 Grad.

Der zweite Antrieb kann dazu konfiguriert sein, die zweite Produktaufnahme von der zweiten Aufnahmestellung vollständig in die zweite Freigabestellung zu bewegen, während die erste Produktaufnahme in der ersten Aufnahmestellung verbleibt.

Ein Abwurf des Produkts kann über eine Kante der ersten Produktaufnahme erfolgen, welche zumindest dann in Richtung der zweiten Produktaufnahme weist, wenn die erste Produktaufnahme in der ersten Aufnahmestellung und die zweite Produktaufnahme in der zweiten Aufnahmestellung vorliegt. Die Kante kann sich parallel zu der Querrichtung erstrecken oder sich zumindest im Wesentlichen parallel zu der Querrichtung erstrecken.

Der erste Antrieb und der zweite Antrieb können dazu konfiguriert sein, eine Bewegung der ersten Produktaufnahme von der ersten Aufnahmestellung in die erste Freigabestellung und eine Bewegung der zweiten Produktaufnahme von der zweiten Aufnahmestellung in die zweite Freigabestellung zeitlich versetzt zu starten. Beispielsweise kann die Bewegung der zweiten Produktaufnahme von der zweiten Aufnahmestellung in die zweite Freigabestellung vor der Bewegung der ersten Produktaufnahme von der ersten Aufnahmestellung in die erste Freigabestellung starten. Durch zumindest teilweises Wegziehen der zweiten Produktaufnahme unter einem auf der gemeinsamen Produktaufnahmefläche liegenden Produkt kann eine Tendenz des Produkts zu einer Drehung um eine parallel zu der Querrichtung verlaufende Drehachse hervorgerufen werden. Wenn dann auch noch die erste Produktaufnahme unter dem Produkt weggezogen wird, kann das Produkt auf eine Ablagefläche abgeworfen werden, wobei die zuvor hervorgerufene Tendenz zur Drehung zu einer Drehung um die Drehachse führen kann, insbesondere zu einer Drehung um 180 Grad oder um zumindest im Wesentlichen 180 Grad um die Drehachse.

Die Bewegung der ersten Produktaufnahme von der ersten Aufnahmestellung in die erste Freigabestellung und die Bewegung der zweiten Produktaufnahme von der zweiten Aufnahmestellung in die zweite Freigabestellung können zumindest teilweise zeitlich überlappend stattfinden, auch wenn die Bewegungen zeitlich versetzt gestartet werden.

Der erste Antrieb und der zweite Antrieb können dazu konfiguriert sein, die erste Produktaufnahme von der ersten Aufnahmestellung in die erste Abgabestellung zu bewegen und synchron hierzu die zweite Produktaufnahme von der zweiten Aufnahmestellung in die zweite Abgabestellung zu bewegen. Die erste Produktaufnahme und die zweite Produktaufnahme können synchron zueinander unter einem auf der gemeinsamen Produktaufnahmefläche liegenden Produkt weggezogen werden. Hierdurch kann ein Abwurf des Produkts auf eine Ablagefläche ohne Drehung, insbesondere ohne Drehung um eine sich entlang der Querrichtung erstreckende Drehachse, erreicht werden.

Vorzugsweise ist die Greiferanordnung in einem ersten Betriebsmodus und in einem zweiten Betriebsmodus betreibbar. Der erste Antrieb und der zweite Antrieb können dazu konfiguriert sein, in dem ersten Betriebsmodus die erste Produktaufnahme von der ersten Aufnahmestellung in die erste Abgabestellung zu bewegen und synchron hierzu die zweite Produktaufnahme von der zweiten Aufnahmestellung in die zweite Abgabestellung zu bewegen. Der erste Antrieb und der zweite Antrieb können dazu konfiguriert sein, in dem zweiten Betriebsmodus die zweite Produktaufnahme von der zweiten Aufnahmestellung in Richtung auf die zweite Freigabestellung zu bewegen, während die erste Produktaufnahme in der ersten Aufnahmestellung verbleibt. In dem ersten Betriebsmodus kann ein auf der gemeinsamen Produktaufnahmefläche liegendes Produkt ohne Drehung, insbesondere ohne Drehung um eine sich entlang der Querrichtung erstreckende Drehachse, auf eine Ablagefläche abgeworfen werden. In dem zweiten Betriebsmodus kann ein auf der gemeinsamen Produktaufnahmefläche liegendes Produkt mit Drehung, insbesondere mit Drehung um eine sich entlang der Querrichtung erstreckende Drehachse, auf eine Ablagefläche abgeworfen werden.

Die Greiferanordnung kann eine Steuerung umfassen. Die Steuerung kann dazu konfiguriert sein, den ersten Antrieb und den zweiten Antrieb anzusteuern. Die Steuerung kann dazu konfiguriert sein, zu bestimmen oder die Information zu erhalten, ob ein Produktabwurf mit Drehung oder ein Produktabwurf ohne Drehung erfolgen soll. Die Steuerung kann den ersten Antrieb und den zweiten Antrieb abhängig davon ansteuern, ob ein Produktabwurf mit Drehung oder ein Produktabwurf ohne Drehung durchgeführt werden soll. Die Steuerung kann die Greiferanordnung in dem ersten Betriebsmodus betreiben, wenn ein Produktabwurf ohne Drehung durchgeführt werden soll. Die Steuerung kann die Greiferanordnung in dem zweiten Betriebsmodus betreiben, wenn ein Produktabwurf mit Drehung durchgeführt werden soll.

Das Produkt kann ein Lebensmittelprodukt sein. Das Produkt kann beispielsweise ein Fleischstück oder ein Fischstück umfassen.

Das Produkt kann eine Produktoberseite und eine Produktunterseite aufweisen. Die Produktoberseite und die Produktunterseite können unterschiedlich ausgebildet sein. Beispielsweise kann das Produkt ein Fleischstück sein, dessen eine Seite (Oberseite oder Unterseite) eine Hautoberfläche aufweist und dessen andere Seite (Unterseite oder Oberseite) eine Fleischoberfläche aufweist. Beispielsweise kann das Produkt als Fischstück ausgebildet sein, dessen eine Seite (Oberseite oder Unterseite) eine Hautoberfläche aufweist und dessen andere Seite (Unterseite oder Oberseite) eine Fleischoberfläche aufweist. Die Greiferanordnung kann dazu ausgebildet sein, solche Fisch- oder Fleischstücke übereinander auf einer Ablagefläche derart abzustapeln, dass immer gleichartige Seiten aufeinanderliegen. So kann beispielsweise bei der Bearbeitung von Fischstücken eine Kontamination der Fleischseite durch Schuppen von einem darüber oder darunterliegenden Produktstück vermieden oder reduziert werden.

Die Greiferanordnung kann einen Niederhalter aufweisen. Der Niederhalter kann einen Niederhalterkörper und einen Niederhalterantrieb umfassen. Der Niederhalterantrieb kann dazu konfiguriert sein, den Niederhalterkörper nach unten in Richtung auf die erste Produktaufnahme zu bewegen, um ein Produkt zwischen dem Niederhalterkörper und der ersten Produktaufnahme zu klemmen. Der Niederhalter kann einem Verrutschen des Produkts auf der ersten Produktaufnahme entgegenwirken. Der Niederhalterantrieb kann dazu konfiguriert sein, den Niederhalterkörper nach oben in Richtung von der ersten Produktaufnahme weg zu bewegen, um eine Klemmung des Produkts zwischen dem Niederhalterkörper und der ersten Produktaufnahme aufzuheben. Durch Aufheben der Klemmung kann der Produktabwurf initiiert werden.

Gemäß einer Ausführungsform sind der erste Greifer und der zweite Greifer als einseitige Untergreifer ausgebildet, welche jeweils nur eine einzige Produktaufnahme umfassen. Gemäß einer weiteren Ausführungsform sind der erste Greifer und der zweite Greifer jeweils als Greiferbackenpaar ausgebildet, wobei der erste Greifer und der zweite Greifer jeweils zwei sich entlang der Querrichtung gegenüberliegende Produktaufnahmen aufweisen.

Der erste Greifer kann zusätzlich zu der ersten Produktaufnahme eine dritte Produktaufnahme umfassen. Die erste Produktaufnahme und die dritte Produktaufnahme können sich entlang der Querrichtung gegenüberliegen. Der erste Antrieb kann dazu konfiguriert sein, die erste Produktaufnahme und die dritte Produktaufnahme parallel zu der Querrichtung aufeinander zu zu bewegen, um die erste Produktaufnahme von der ersten Freigabestellung in die erste Aufnahmestellung zu bewegen. Der erste Antrieb kann dazu konfiguriert sein, die erste Produktaufnahme und die dritte Produktaufnahme parallel zu der Querrichtung voneinander weg zu bewegen, um die erste Produktaufnahme von der ersten Aufnahmestellung in die erste Freigabestellung zu bewegen. In der ersten Aufnahmestellung kann die dritte Produktaufnahme zumindest einen Teil der gemeinsamen Produktaufnahmefläche bilden. Die erste Produktaufnahme und die dritte Produktaufnahme können von gegenüberliegenden Seiten unter das Produkt geschoben werden, wenn die erste Produktaufnahme und die dritte Produktaufnahme in die erste Aufnahmestellung aufeinander zu bewegt werden. Ein beiderseitiges Untergreifen des Produkts kann die Aufnahme des Produkts erleichtern. Der erste Antrieb kann dazu konfiguriert sein, die dritte Produktaufnahme spiegelbildlich synchron zu der ersten Produktaufnahme zu bewegen. Der erste Antrieb kann dazu konfiguriert sein, die erste Produktaufnahme und die dritte Produktaufnahme entlang der Querrichtung voneinander weg zu bewegen, so dass zwischen der ersten Produktaufnahme und der dritten Produktaufnahme ein Abwurfspalt für das Produkt entsteht.

Der zweite Greifer kann zusätzlich zu der zweiten Produktaufnahme eine vierte Produktaufnahme umfassen. Die zweite Produktaufnahme und die vierte Produktaufnahme können sich entlang der Querrichtung gegenüberliegen. Der zweite Antrieb kann dazu konfiguriert sein, die zweite Produktaufnahme und die vierte Produktaufnahme parallel zu der Querrichtung aufeinander zu zu bewegen, um die zweite Produktaufnahme von der zweiten Freigabestellung in die zweite Aufnahmestellung zu bewegen. Der zweite Antrieb kann dazu konfiguriert sein, die zweite Produktaufnahme und die vierte Produktaufnahme parallel zu der Querrichtung voneinander weg zu bewegen, um die zweite Produktaufnahme von der zweiten Aufnahmestellung in die zweite Freigabestellung zu bewegen. In der zweiten Aufnahmestellung kann die vierte Produktaufnahme zumindest einen Teil der gemeinsamen Produktaufnahmefläche bilden. Die zweite Produktaufnahme und die vierte Produktaufnahme können von gegenüberliegenden Seiten unter das Produkt geschoben werden, wenn die zweite Produktaufnahme und die vierte Produktaufnahme in die zweite Aufnahmestellung aufeinander zu bewegt werden. Ein beiderseitiges Untergreifen des Produkts kann die Aufnahme des Produkts erleichtern. Der zweite Antrieb kann dazu konfiguriert sein, die vierte Produktaufnahme spiegelbildlich synchron zu der zweiten Produktaufnahme zu bewegen. Der zweite Antrieb kann dazu konfiguriert sein, die zweite Produktaufnahme und die vierte Produktaufnahme entlang der Querrichtung voneinander weg zu bewegen, so dass zwischen der zweiten Produktaufnahme und der vierten Produktaufnahme ein Abwurfspalt für das Produkt entsteht.

Wenn die erste Produktaufnahme in der ersten Aufnahmestellung und die zweite Produktaufnahme in der zweiten Aufnahmestellung vorliegt, kann ein Abstand zwischen der ersten Produktaufnahme und der zweiten Produktaufnahme entlang der Längsrichtung höchstens 10 cm, oder höchstens 7 cm, oder höchstens 5 cm, oder höchstens 3 cm, oder höchstens 2 cm, oder höchstens 1 cm betragen. Der Abstand kann gering genug sein, um zu verhindern, dass das Produkt zwischen der ersten Produktaufnahme und der zweiten Produktaufnahme hindurchfällt.

Gemäß einem zweiten Aspekt der Erfindung wird ein Greiferroboter bereitgestellt. Der Greiferroboter umfasst die Greiferanordnung des ersten Aspekts der Erfindung und eine Verfahreinrichtung. Der Hauptkörper ist an der Verfahreinrichtung angebracht. Die Verfahreinrichtung ist dazu konfiguriert, den Hauptkörper im Raum zu bewegen.

Die Verfahreinrichtung kann die Greiferanordnung über eine Bereitstellungsfläche bewegen, auf welcher ein Produkt liegt. Die Greiferanordnung kann das Produkt aufnehmen. Die Verfahreinrichtung kann die Greiferanordnung mit dem auf der gemeinsamen Produktaufnahmefläche aufgenommenen Produkt über eine Ablagefläche verfahren. Über der Ablagefläche kann die Greiferanordnung das Produkt mit Drehung oder ohne Drehung auf die Ablagefläche abwerfen.

Gemäß einem dritten Aspekt der Erfindung wird ein Verfahren zum Handhaben von Produkten bereitgestellt. Es wird ein Produkt auf einer Produktaufnahmefläche aufgenommen, welche zumindest teilweise gemeinsam durch eine erste Produktaufnahme und eine zweite Produktaufnahme gebildet wird. Die erste Produktaufnahme und die zweite Produktaufnahme sind an einem Hauptkörper angebracht. Die erste Produktaufnahme und die zweite Produktaufnahme liegen entlang einer relativ zu dem Hauptkörper definierten Längsrichtung hintereinander. Die zweite Produktaufnahme wird parallel zu einer zu der Längsrichtung senkrechten Querrichtung relativ zu der ersten Produktaufnahme bewegt, wobei die zweite Produktaufnahme unter dem Produkt weggezogen wird, während das Produkt noch zumindest teilweise auf der ersten Produktaufnahme liegt, so dass ein Abwurf des Produkts mit Drehung des Produkts um eine parallel zu der Querrichtung stehende Drehachse begünstigt wird.

Während des Abwurfs des Produkts kann der Hauptkörper bewegt werden. Die Bewegung des Hauptkörpers kann die Drehung des Produkts unterstützen.

Das Produkt kann mittels eines Niederhalters gegen die erste Produktaufnahme geklemmt werden. Die Klemmung kann zum Initiieren des Abwurfs des Produkts aufgehoben werden.

Die Produktaufnahmefläche kann von der ersten Produktaufnahme und der zweiten Produktaufnahme zusammen mit einer dritten Produktaufnahme und einer vierten Produktaufnahme gebildet werden. Die erste Produktaufnahme und die dritte Produktaufnahme können sich entlang der Querrichtung gegenüberliegen und ein erstes Greiferbackenpaar bilden. Die zweite Produktaufnahme und die vierte Produktaufnahme können sich entlang der Querrichtung gegenüberliegen und ein zweites Greiferbackenpaar bilden. Die Produktaufnahmen eines Greiferbackenpaars können synchron entlang der Querrichtung aufeinander zu bewegt oder synchron entlang der Querrichtung voneinander wegbewegt werden.

Es werden eine Greiferanordnung, ein Greiferroboter und ein Verfahren zum Handhaben von Produkten beschrieben. Merkmale, Erläuterungen und Beschreibungen, welche in Bezug auf einen dieser Aspekte beschrieben werden, lassen sich auf die anderen Aspekte übertragen oder sind mit diesen kombinierbar. Die Greiferanordnung oder der Greiferroboter können zum Durchführen des Verfahrens geeignet, ausgelegt und/oder konfiguriert sein. Das Verfahren kann mittels der Greiferanordnung oder mittels des Greiferroboters durchführbar sein oder durchgeführt werden.

Im Folgenden wird die Erfindung anhand von Ausführungsbeispielen weiter erläutert.
Fig. 1 zeigt eine schematische Draufsicht auf eine Greiferanordnung einer ersten Ausführungsform vor der Aufnahme eines Produkts.
Fig. 2 zeigt eine schematische Draufsicht der Greiferanordnung der ersten Ausführungsform mit aufgenommenem Produkt.
Fig. 3 zeigt eine schematische Schnittansicht der Greiferanordnung der ersten Ausführungsform mit aufgenommenem Produkt.
Fig. 4 zeigt schematische Darstellungen der Greiferanordnung der ersten Ausführungsform beim Abwurf des Produkts ohne Drehung.
Fig. 5 zeigt schematische Darstellungen der Greiferanordnung der ersten Ausführungsform beim Abwurf des Produkts mit Drehung.
Fig. 6 zeigt eine schematische Draufsicht auf eine Greiferanordnung einer zweiten Ausführungsform vor der Aufnahme eines Produkts.
Fig. 7 zeigt eine schematische Draufsicht auf die Greiferanordnung der zweiten Ausführungsform mit aufgenommenem Produkt.
Fig. 8 zeigt schematische Darstellungen der Greiferanordnung der zweiten Ausführungsform beim Abwurf des Produkts ohne Drehung.
Fig. 9 zeigt schematische Darstellungen der Greiferanordnung der zweiten Ausführungsform beim Abwurf des Produkts mit Drehung.

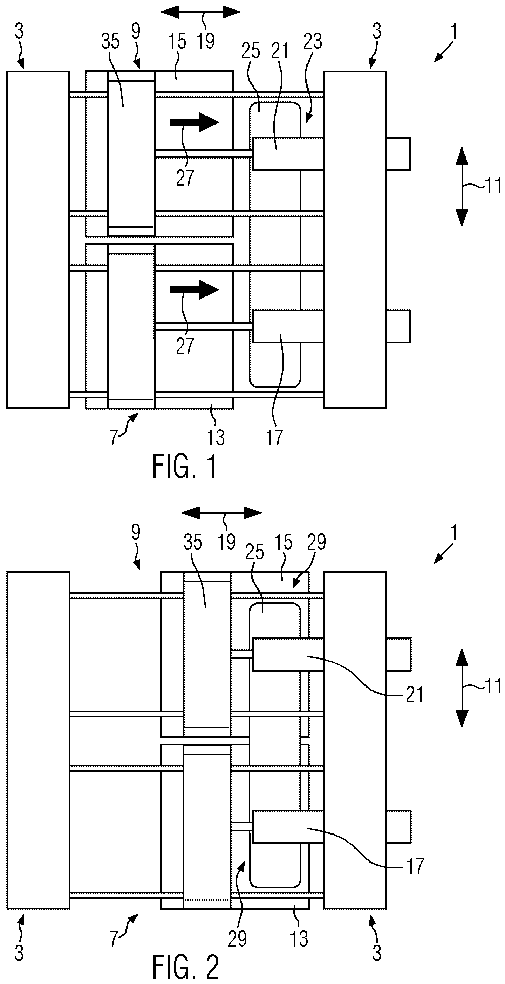

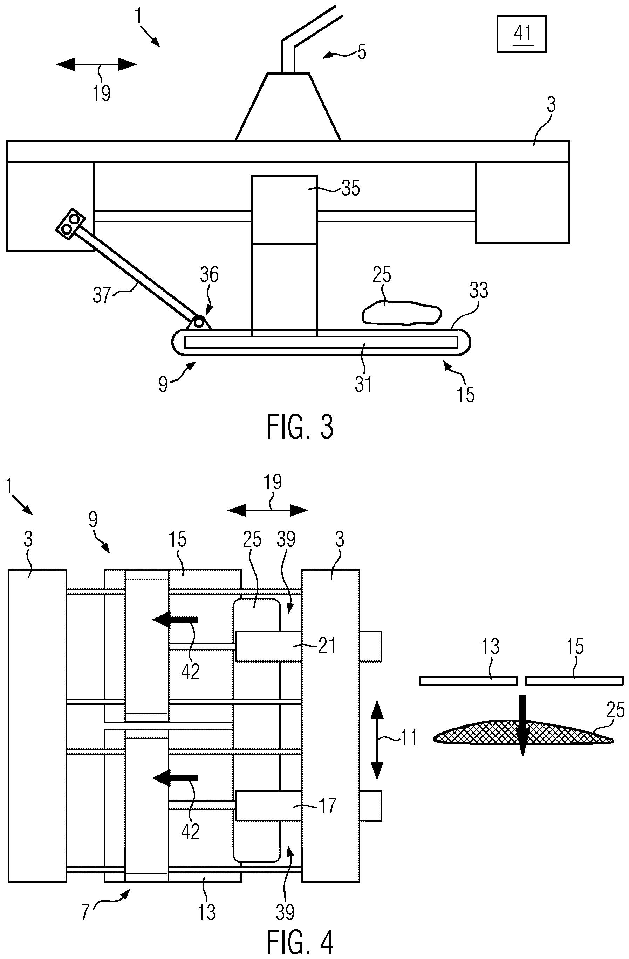

Die Fig. 1 bis 5 zeigen eine Greiferanordnung 1 einer ersten Ausführungsform. Die Greiferanordnung 1 umfasst einen Hauptkörper 3 zum Anbringen an einer Verfahreinrichtung 5 (siehe Fig. 3). Die Verfahreinrichtung 5 kann beispielsweise als Roboterarm ausgebildet sein und den Hauptkörper 3 im Raum verfahren. An dem Hauptkörper 3 sind ein erster Greifer 7 und ein zweiter Greifer 9 angebracht. Der erste Greifer 7 und der zweite Greifer 9 sind entlang einer Längsrichtung 11 hintereinander angeordnet. Der erste Greifer 7 umfasst eine erste Produktaufnahme 13 und der zweite Greifer 9 umfasst eine zweite Produktaufnahme 15. Der erste Greifer 7 umfasst einen ersten Antrieb 17. Der erste Antrieb 17 ist dazu konfiguriert, die erste Produktaufnahme 13 parallel zu einer Querrichtung 19 zwischen einer ersten Freigabestellung und einer ersten Aufnahmestellung zu bewegen. Der zweite Greifer 9 umfasst einen zweiten Antrieb 21. Der zweite Antrieb 21 ist dazu konfiguriert, die zweite Produktaufnahme 15 parallel zu der Querrichtung 19 zwischen einer zweiten Freigabestellung und einer zweiten Aufnahmestellung zu bewegen. Die Längsrichtung 11 und die Querrichtung 19 sind jeweils relativ zu dem Hauptkörper 3 definiert. Die Längsrichtung 11 und die Querrichtung 19 sind zueinander senkrecht. Die Längsrichtung 11 und die Querrichtung 19 sind vorzugsweise horizontale Richtungen.

In Fig. 1 ist die Greiferanordnung 1 vor Aufnahme eines auf einer Bereitstellungsfläche 23 liegenden Produkts 25 dargestellt. Die erste Produktaufnahme 13 befindet sich in der ersten Freigabestellung und die zweite Produktaufnahme 15 befindet sich in der zweiten Freigabestellung. Die erste Produktaufnahme 13 und die zweite Produktaufnahme 15 sind entlang der Längsrichtung 11 hintereinander angeordnet und liegen seitlich neben dem aufzunehmenden Produkt 25. Wie durch die Pfeile 27 in Fig. 1 symbolisiert, werden die erste Produktaufnahme 13 und die zweite Produktaufnahme 15 durch den ersten Antrieb 17 bzw. den zweiten Antrieb 21 entlang der Querrichtung 19 in Richtung der Aufnahmestellung bewegt, was in Fig. 1 einer Bewegung nach rechts entspricht. Dabei werden die erste Produktaufnahme 13 und die zweite Produktaufnahme 15 unter das Produkt 25 geschoben, so dass sich die in Fig. 2 dargestellte Betriebssituation ergibt.

In Fig. 2 ist die erste Produktaufnahme 13 in der ersten Aufnahmestellung und die zweite Produktaufnahme 15 in der zweiten Aufnahmestellung. Die erste Produktaufnahme 13 und die zweite Produktaufnahme 15 bilden in Fig. 2 zusammen eine gemeinsame Produktaufnahmefläche 29, auf welcher das Produkt 25 liegt.

Fig. 3 zeigt eine Schnittansicht der Greiferanordnung 1 in der in Fig. 2 dargestellten Betriebssituation mit dem auf der gemeinsamen Produktaufnahmefläche 29 aufgenommenen Produkt 25. Die Schnittebene der Ansicht aus Fig. 3 ist parallel zu der Querrichtung 19 und senkrecht zu der Längsrichtung 11. Wie in Fig. 3 dargestellt, kann die zweite Produktaufnahme 15 ein plattenförmiges Strukturelement 31 aufweisen, um welches entlang der Querrichtung 19 umlaufend ein Band 33 vorgesehen ist. Das Strukturelement 31 ist mit einem Schlitten 35 verbunden, welcher durch den zweiten Antrieb 21 entlang der Querrichtung 19 bewegt wird. Das Band 33 umfasst einen Haltebereich 26, welcher durch eine Halteeinrichtung 37 in Bezug auf den Hauptkörper 3 ortsfest gehalten wird. Das Produkt 25 liegt auf dem Obertrum des Bands 33. Dadurch, dass der Haltebereich 36 relativ zu dem Hauptkörper 3 stationär gehalten wird, kann die zweite Produktaufnahme 15 ohne Relativbewegung zwischen dem Produkt 25 und dem Obertrum des Bands 33 entlang der Querrichtung 19 durch eine Bewegung des Strukturelements 31 unter das Produkt 25 geschoben oder unter dem Produkt 25 weggezogen werden.

Die erste Produktaufnahme 13 kann analog zu der zweiten Produktaufnahme 15 ausgebildet sein und ebenfalls ein Strukturelement 31 und ein Band 33 umfassen. Alternativ können die erste Produktaufnahme 13 und die zweite Produktaufnahme 15 ohne das Band 33 ausgebildet sein und das Produkt 25 kann direkt auf dem Strukturelement 31 liegen.

Nachdem das Produkt 25 auf der gemeinsamen Produktaufnahmefläche 29 aufgenommen wurde, wird der Hauptkörper 3 mit dem daran angebrachten ersten Greifer 7 und zweiten Greifer 9 mittels der Verfahreinrichtung 5 über eine Ablagefläche 39 verfahren. Die Greiferanordnung 1 kann das Produkt 25 in einem ersten Betriebsmodus ohne Drehung auf die Ablagefläche 39 abwerfen oder das Produkt 25 in einem zweiten Betriebsmodus mit Drehung auf die Ablagefläche 39 abwerfen. Je nachdem, ob der Produktabwurf mit Drehung oder ohne Drehung erfolgen soll, steuert eine Steuerung 41 (siehe Fig. 3) der Greiferanordnung 1 den ersten Antrieb 17 und den zweiten Antrieb 21 unterschiedlich an.

Fig. 4 zeigt den Abwurf des Produkts 25 in dem ersten Betriebsmodus ohne Drehung. Die erste Produktaufnahme 13 und die zweite Produktaufnahme 15 werden synchron zueinander aus der jeweiligen Aufnahmestellung in die Freigabestellung gefahren. Dies entspricht in Fig. 4 einer durch die Pfeile 42 dargestellten Bewegung der ersten Produktaufnahme 13 und der zweiten Produktaufnahme 15 unter dem Produkt 25 weg nach links. Der rechte Teil von Fig. 4 zeigt schematisch den daraus resultierenden Produktabwurf in Blickrichtung entlang der Querrichtung 19.

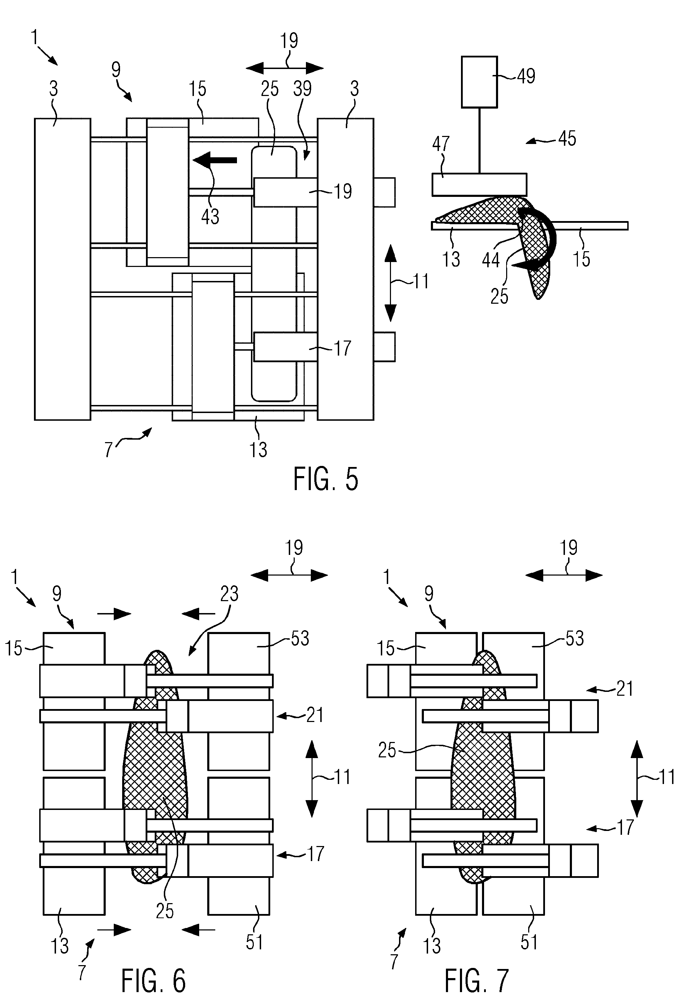

Fig. 5 zeigt den Produktabwurf gemäß dem zweiten Betriebsmodus mit Drehung. Hierbei wird zunächst lediglich die zweite Produktaufnahme 15 von der zweiten Aufnahmestellung in die zweite Freigabestellung verfahren, was in Fig. 5 mit dem Pfeil 43 dargestellt ist. Die erste Produktaufnahme 13 bleibt zumindest zunächst in der ersten Aufnahmestellung. Somit wird die zweite Produktaufnahme 15 unter einem Bereich des Produkts 25 weggezogen, während ein anderer Bereich des Produkts 25 noch auf der ersten Produktaufnahme 13 liegt. Wie in dem rechten Teil von Fig. 5 dargestellt, wird hierdurch eine Kippbewegung des Produkts 25 um eine zu der Querrichtung 19 parallele Drehachse 44 begünstigt.

Gemäß einer Ausführungsform kann das Wegbewegen der zweiten Produktaufnahme 15 unter dem Produkt 25 bereits ausreichen, um das Produkt 25 zu veranlassen, auf die Ablagefläche 39 zu fallen, und dabei insbesondere eine Drehung um 180 Grad um die Drehachse 44 durchzuführen. Optional kann die erste Produktaufnahme 13 zeitversetzt zu dem auf die zweite Freigabestellung Hinbewegen der zweiten Produktaufnahme 15 auf die erste Freigabestellung hinbewegt werden, um das Produkt 25 zum Herabfallen zu bewegen. Optional kann durch eine geeignete Bewegung des Hauptkörpers 3, welche durch die Verfahreinrichtung 5 initiiert werden kann, zu einem geeigneten Zeitpunkt, insbesondere nach dem Verfahren der zweiten Produktaufnahme 15 in die zweite Freigabestellung, das Produkt 25 beschleunigt werden, um das Produkt 25 zum Herabfallen zu bringen.

Optional ist ein Niederhalter 45 vorgesehen, welcher einen Niederhalterkörper 47 und einen Niederhalterantrieb 49 umfasst. Der Niederhalterantrieb 49 kann den Niederhalterkörper 47 nach Aufnahme des Produkts 25 auf der gemeinsamen Produktaufnahmefläche 29 nach unten auf die erste Produktaufnahme 13 zu bewegen, um das Produkt 25 zwischen dem Niederhalterkörper 47 und der ersten Produktaufnahme 13 zu klemmen. Beim Abwurf des Produkts 25 kann der Niederhalterantrieb 49 den Niederhalterkörper 47 nach oben von der ersten Produktaufnahme 13 wegbewegen, um die Klemmung aufzuheben und das Produkt 25 zum Abwurf freizugeben.

Die Fig. 6 bis 9 zeigen eine zweite Ausführungsform der Greiferanordnung 1. Die zweite Ausführungsform unterscheidet sich von der ersten Ausführungsform im Wesentlichen dadurch, dass der erste Greifer 7 zusätzlich zu der ersten Produktaufnahme 13 eine dritte Produktaufnahme 51 aufweist und der zweite Greifer 9 zusätzlich zu der zweiten Produktaufnahme 15 eine vierte Produktaufnahme 53 aufweist. Die erste Produktaufnahme 13 und die dritte Produktaufnahme 51 liegen sich entlang der Querrichtung 19 gegenüber und bilden ein erstes Greiferbackenpaar. Die zweite Produktaufnahme 15 und die vierte Produktaufnahme 53 liegen sich entlang der Querrichtung 19 gegenüber und bilden ein zweites Greiferbackenpaar. Die Produktaufnahmen 13, 51, 5, 53 eines Greiferbackenpaars werden durch den jeweiligen Antrieb 17, 21 synchron zueinander entlang der Querrichtung 19 aufeinander zu bewegt oder synchron zueinander entlang der Querrichtung 19 voneinander wegbewegt, um das Produkt 25 aufzunehmen oder freizugeben.

In Fig. 6 ist die Greiferanordnung 1 vor Aufnahme des Produkts 25 über der Bereitstellungsfläche 23 angeordnet. Der erste Antrieb 17 bewegt die erste Produktaufnahme 13 und die dritte Produktaufnahme 15 entlang der Querrichtung 19 aufeinander zu und schiebt so die erste Produktaufnahme 13 und die dritte Produktaufnahme 51 dabei von gegenüberliegenden Seiten unter das Produkt 15. Ebenso wie bei der ersten Ausführungsform wird dabei die erste Produktaufnahme 13 entlang der Querrichtung 19 von einer ersten Freigabestellung in eine erste Aufnahmestellung bewegt. Gleichzeitig bewegt der zweite Antrieb 21 die zweite Produktaufnahme 15 und die vierte Produktaufnahme 53 entlang der Querrichtung 19 aufeinander zu und schiebt so die zweite Produktaufnahme 15 und die vierte Produktaufnahme 53 von gegenüberliegenden Seiten unter das Produkt 25. Ebenso wie bei der ersten Ausführungsform wird dabei die zweite Produktaufnahme 15 von einer zweiten Freigabestellung in eine zweite Aufnahmestellung bewegt.

Fig. 7 zeigt die Greiferanordnung 1 nach Aufnehmen des Produkts 25. Das Produkt 25 liegt auf einer gemeinsamen Produktaufnahmefläche 29, welche in der zweiten Ausführungsform zusammen von der ersten Produktaufnahme 13, der zweiten Produktaufnahme 15, der dritten Produktaufnahme 51 und der vierten Produktaufnahme 53 gebildet wird.

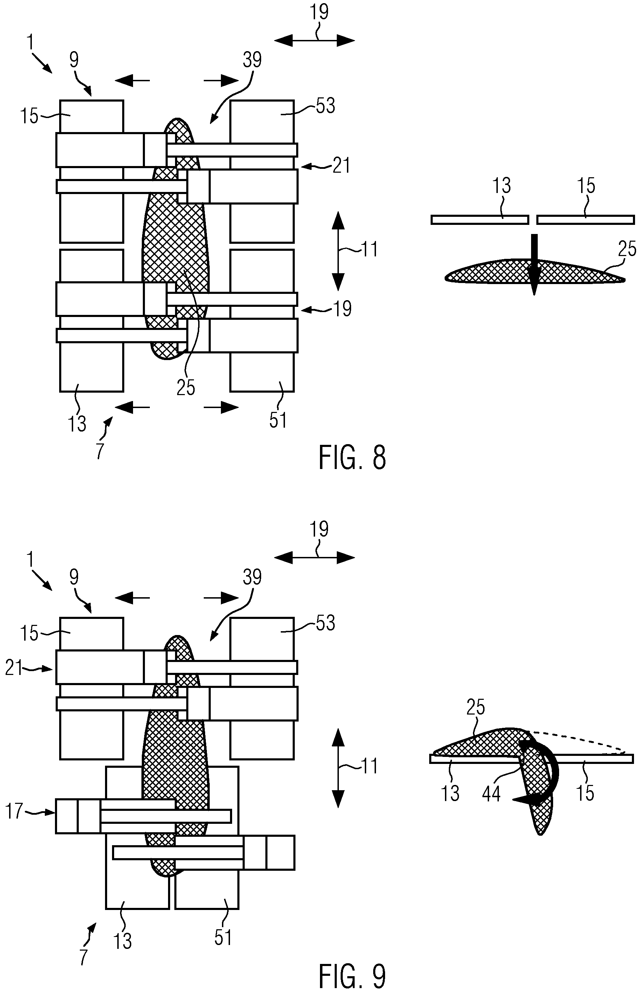

Fig. 8 zeigt das Abwerfen des Produkts 25 ohne Drehung in einem ersten Betriebsmodus gemäß der zweiten Ausführungsform. Hierbei werden durch den ersten Antrieb 17 die erste Produktaufnahme 13 und die dritte Produktaufnahme 51 entlang der Querrichtung 19 voneinander wegbewegt und so unter dem Produkt 25 weggezogen. Synchron hierzu werden durch den zweiten Antrieb 21 die zweite Produktaufnahme 15 und die vierte Produktaufnahme 53 entlang der Querrichtung 19 voneinander wegbewegt und so unter dem Produkt 25 weggezogen. Wie im rechten Teil von Fig. 8 dargestellt, wird das Produkt 25 freigegeben und fällt ohne Drehung nach unten auf die Ablagefläche 39.

Fig. 9 zeigt den Abwurf des Produkts 25 mit Drehung in einem zweiten Betriebsmodus gemäß der zweiten Ausführungsform. Der zweite Antrieb 21 bewegt die zweite Produktaufnahme 15 und die vierte Produktaufnahme 53 entlang der Querrichtung 19 auseinander und damit unter dem Produkt 25 weg, während die erste Produktaufnahme 13 und die dritte Produktaufnahme 51 in der geschlossenen Stellung verbleiben und das Produkt 25 weiterhin tragen. Wie im rechten Teil von Fig. 9 dargestellt, wird hierdurch eine Drehung des Produkts 25 um eine sich parallel zu der Querrichtung 19 erstreckende Drehachse 44 begünstigt.

## Patentansprüche

1. Greiferanordnung (1), umfassend:
einen Hauptkörper (3) zum Anbringen an einer Verfahreinrichtung (5);
einen an dem Hauptkörper (3) angebrachten ersten Greifer (7); und
einen an dem Hauptkörper (3) angebrachten zweiten Greifer (9);
wobei der erste Greifer (7) eine erste Produktaufnahme (13) und einen ersten Antrieb (17) umfasst, wobei der erste Antrieb (17) dazu konfiguriert ist, die erste Produktaufnahme (13) parallel zu einer relativ zu dem Hauptkörper (3) definierten Querrichtung (19) zwischen einer ersten Freigabestellung und einer ersten Aufnahmestellung zu bewegen;
wobei der zweite Greifer (9) eine zweite Produktaufnahme (15) und einen zweiten Antrieb (21) umfasst, wobei der zweite Antrieb (21) dazu konfiguriert ist, die zweite Produktaufnahme (15) parallel zu der Querrichtung (19) zwischen einer zweiten Freigabestellung und einer zweiten Aufnahmestellung zu bewegen; und
wobei der erste Greifer (7) und der zweite Greifer (9) entlang einer zu der Querrichtung (19) senkrechten Längsrichtung (11) hintereinanderliegen, so dass die erste Produktaufnahme (13) und die zweite Produktaufnahme (15) zusammen zumindest einen Teil einer gemeinsamen Produktaufnahmefläche (29) bilden, wenn die erste Produktaufnahme (13) in der ersten Aufnahmestellung und die zweite Produktaufnahme (15) in der zweiten Aufnahmestellung vorliegt.

2. Greiferanordnung nach Anspruch 1, wobei der zweite Antrieb (21) dazu konfiguriert ist, die zweite Produktaufnahme (15) von der zweiten Aufnahmestellung in Richtung auf die zweite Freigabestellung zu bewegen, während die erste Produktaufnahme (13) in der ersten Aufnahmestellung verbleibt.

3. Greiferanordnung nach Anspruch 1 oder 2, wobei der zweite Antrieb (21) dazu konfiguriert ist, die zweite Produktaufnahme (15) von der zweiten Aufnahmestellung vollständig in die zweite Freigabestellung zu bewegen, während die erste Produktaufnahme (13) in der ersten Aufnahmestellung verbleibt.

4. Greiferanordnung nach einem der vorangehenden Ansprüche, wobei der erste Antrieb (17) und der zweite Antrieb (21) dazu konfiguriert sind, eine Bewegung der ersten Produktaufnahme (13) von der ersten Aufnahmestellung in die erste Freigabestellung und eine Bewegung der zweiten Produktaufnahme (15) von der zweiten Aufnahmestellung in die zweite Freigabestellung zeitlich versetzt zu starten.

5. Greiferanordnung nach einem der vorangehenden Ansprüche, wobei der erste Antrieb (17) und der zweite Antrieb (21) dazu konfiguriert sind, die erste Produktaufnahme (13) von der ersten Aufnahmestellung in die erste Abgabestellung zu bewegen und synchron hierzu die zweite Produktaufnahme (15) von der zweiten Aufnahmestellung in die zweite Abgabestellung zu bewegen.

6. Greiferanordnung nach einem der vorangehenden Ansprüche, wobei
die Greiferanordnung (1) in einem ersten Betriebsmodus und in einem zweiten Betriebsmodus betreibbar ist;
wobei der erste Antrieb (17) und der zweite Antrieb (21) dazu konfiguriert sind, in dem ersten Betriebsmodus die erste Produktaufnahme (13) von der ersten Aufnahmestellung in die erste Abgabestellung zu bewegen und synchron hierzu die zweite Produktaufnahme (15) von der zweiten Aufnahmestellung in die zweite Abgabestellung zu bewegen; und
wobei der erste Antrieb (17) und der zweite Antrieb (21) dazu konfiguriert sind, in dem zweiten Betriebsmodus die zweite Produktaufnahme (15) von der zweiten Aufnahmestellung in Richtung auf die zweite Freigabestellung zu bewegen, während die erste Produktaufnahme (13) in der ersten Aufnahmestellung verbleibt.

7. Greiferanordnung nach einem der vorangehenden Ansprüche, wobei die Greiferanordnung (1) einen Niederhalter (45) mit einem Niederhalterkörper (47) und einem Niederhalterantrieb (49) umfasst, wobei der Niederhalterantrieb (49) dazu konfiguriert ist, den Niederhalterkörper (47) nach unten in Richtung auf die erste Produktaufnahme (13) zu bewegen, um ein Produkt (25) zwischen dem Niederhalterkörper (47) und der ersten Produktaufnahme (13) zu klemmen.

8. Greiferanordnung nach einem der vorangehenden Ansprüche, wobei der erste Greifer (7) zudem eine dritte Produktaufnahme (51) umfasst, wobei sich die erste Produktaufnahme (13) und die dritte Produktaufnahme (51) entlang der Querrichtung (19) gegenüberliegen, wobei der erste Antrieb (17) dazu konfiguriert ist, die erste Produktaufnahme (13) und die dritte Produktaufnahme (51) parallel zu der Querrichtung (19) aufeinander zu zu bewegen, um die erste Produktaufnahme (13) von der ersten Freigabestellung in die erste Aufnahmestellung zu bewegen.

9. Greiferanordnung nach einem der vorangehenden Ansprüche, wobei der zweite Greifer (9) zudem eine vierte Produktaufnahme (53) umfasst, wobei sich die zweite Produktaufnahme (15) und die vierte Produktaufnahme (53) entlang der Querrichtung (19) gegenüberliegen, wobei der zweite Antrieb (21) dazu konfiguriert ist, die zweite Produktaufnahme (15) und die vierte Produktaufnahme (53) parallel zu der Querrichtung (19) aufeinander zu zu bewegen, um die zweite Produktaufnahme (15) von der zweiten Freigabestellung in die zweite Aufnahmestellung zu bewegen.

10. Greiferanordnung nach einem der vorangehenden Ansprüche, wobei, wenn die erste Produktaufnahme (13) in der ersten Aufnahmestellung und die zweite Produktaufnahme (15) in der zweiten Aufnahmestellung vorliegt, ein Abstand zwischen der ersten Produktaufnahme (13) und der zweiten Produktaufnahme (15) entlang der Längsrichtung (11) höchstens 10 cm, oder höchstens 7 cm, oder höchstens 5 cm, oder höchstens 3 cm, oder höchstens 2 cm, oder höchstens 1 cm beträgt.

11. Greiferroboter, umfassend:
die Greiferanordnung (1) nach einem der vorangehenden Ansprüche;
eine Verfahreinrichtung (5);
wobei der Hauptkörper (3) an der Verfahreinrichtung (5) angebracht ist; und
wobei die Verfahreinrichtung (5) dazu konfiguriert ist, den Hauptkörper (3) im Raum zu bewegen.

12. Verfahren zum Handhaben von Produkten (25), umfassend:
Aufnehmen eines Produkts (25) auf einer Produktaufnahmefläche (29), welche zumindest teilweise gemeinsam durch eine erste Produktaufnahme (13) und eine zweite Produktaufnahme (15) gebildet wird, wobei die erste Produktaufnahme (13) und die zweite Produktaufnahme (15) an einem Hauptkörper (3) angebracht sind und entlang einer relativ zu dem Hauptkörper (3) definierten Längsrichtung (11) hintereinanderliegen; und
Bewegen der zweiten Produktaufnahme (15) parallel zu einer zu der Längsrichtung (11) senkrechten Querrichtung (19) relativ zu der ersten Produktaufnahme (13), wobei die zweite Produktaufnahme (15) unter dem Produkt (25) weggezogen wird, während das Produkt (25) noch zumindest teilweise auf der ersten Produktaufnahme (13) liegt, so dass ein Abwurf des Produkts (25) mit Drehung des Produkts (25) um eine parallel zu der Querrichtung (19) stehende Drehachse (44) begünstigt wird.

13. Verfahren nach Anspruch 12, wobei während des Abwurfs des Produkts (25) der Hauptkörper (3) bewegt wird, wobei die Bewegung des Hauptkörpers (3) die Drehung des Produkts (25) unterstützt.

14. Verfahren nach Anspruch 12 oder 13, wobei das Produkt (25) mittels eines Niederhalters (45) gegen die erste Produktaufnahme (13) geklemmt wird, wobei die Klemmung zum Initiieren des Abwurfs des Produkts (25) aufgehoben wird.

15. Verfahren nach einem der Ansprüche 12 bis 14, wobei
die Produktaufnahmefläche (29) von der ersten Produktaufnahme (13) und der zweiten Produktaufnahme (15) zusammen mit einer dritten Produktaufnahme (51) und einer vierten Produktaufnahme (53) gebildet wird;
sich die erste Produktaufnahme (13) und die dritte Produktaufnahme (51) entlang der Querrichtung (19) gegenüberliegen und ein erstes Greiferbackenpaar bilden;
sich die zweite Produktaufnahme (15) und die vierte Produktaufnahme (53) entlang der Querrichtung (19) gegenüberliegen und ein zweites Greiferbackenpaar bilden; und
die Produktaufnahmen (13, 15, 51, 53) eines Greiferbackenpaares synchron entlang der Querrichtung (19) aufeinander zubewegt oder synchron entlang der Querrichtung (19) voneinander wegbewegt werden.
